# EUROPEAN PATENT APPLICATION

(11) **EP 2 767 747 A1**
(43) Date of publication of application: **20.08.2014**
(21) Application number: 12840092.6
(22) Date of filing: 11.10.2012
(51) Int. Cl.: F17C 5/06, C01B 3/26, C01B 3/38

(54) **HYDROGEN STATION**

(30) Priority: 14.10.2011 JP 2011227095
(71) Applicant: JX Nippon Oil & Energy Corporation, Chiyoda-ku Tokyo 100-8162 (JP); Japan Petroleum Energy Center, Tokyo 105-0001 (JP)
(72) Inventor: SEGAWA Atsushi, Tokyo 100-8162 (JP); IKI Hideshi, Tokyo 100-8162 (JP); KONNO Hirofumi, Tokyo 100-8162 (JP)
(74) Representative: Grünecker, Kinkeldey, Stockmair & Schwanhäusser
(86) International application number: PCT/JP2012/076337
(87) International publication number: WO 2013/054851

(57) **Abstract**

Provided is a hydrogen station that supplies hydrogen, including: a shaft power generation unit that generates shaft power and heat; a reactor that obtains hydrogen by causing a reaction in a raw material using the heat supplied from the shaft power generation unit; and a compressor that compresses the hydrogen obtained by the reactor, wherein the shaft power generation unit drives the other devices and drives the compressor by applying the shaft power thereto.

## Description

### Technical Field

The present invention relates to a hydrogen station that supplies hydrogen.

### Background Art

As a hydrogen station of the related art, for example, a hydrogen station disclosed in Patent Literature 1 is known. The hydrogen station of Patent Literature 1 includes a storage tank that stores organic hydride, a reactor that obtains hydrogen by causing a dehydrogenation reaction in the organic hydride supplied from the storage tank, a hydrogen purifying device that purifies the hydrogen obtained by the reactor, and a heating device that heats the reactor. As the heating device, a combustion burner is used.

### Citation List

### Patent Literature

Patent Literature 1: Japanese Patent Application Laid-Open No. 2004-256326

### Summary of Invention

### Technical Problem

However, in the above-described hydrogen station, the combustion burner is provided so as to heat the reactor. The combustion burner is provided to heat only the reactor, and is not used for the other purposes inside the station. As a result, the energy is not effectively used in the entire station. Meanwhile, in the hydrogen station, a hydrogen purifying process needs to be performed on the hydrogen causing a reaction in the reactor. Since a hydrogen pressure raising process is needed at the step earlier than the hydrogen purifying process, a compressor that compresses the hydrogen obtained by the reactor is needed. Further, since a motor that is driven by electric power is provided in order to drive the compressor, separate energy is needed. As described above, the related art has a problem in that the energy efficiency is low in the entire station.

Therefore, an object of the present invention is to provide a hydrogen station capable of improving energy efficiency in an entire station.

### Solution to Problem

According to an embodiment of the present invention, there is provided a hydrogen station that supplies hydrogen, including: a shaft power generation unit that generates shaft power and heat; a reactor that obtains hydrogen by causing a reaction in a raw material using the heat supplied from the shaft power generation unit; and a compressor that compresses the hydrogen obtained by the reactor, wherein the shaft power generation unit drives the other devices and drives the compressor by applying the shaft power thereto.

In the hydrogen station according to the embodiment of the present invention, hydrogen may be obtained in a manner such that the reactor causes a reaction in the raw material by using the heat from the shaft power generation unit. Since the shaft power generation unit may generate not only heat, but also shaft power, the shaft power generation unit may drive the other devices. In this way, since the heat of the shaft power generation unit also usable for the other purposes is used to heat the reactor instead of using a dedicated heating device for the reactor, the energy efficiency in the station may be improved. Further, the shaft power generation unit may drive the compressor compressing hydrogen by applying the shaft power thereto. That is, even when a motor for driving the compressor is not provided, the compressor may be driven by directly using physical power as the shaft power of the shaft power generation unit without using electric power. Accordingly, the energy efficiency in the entire station may be improved.

In the hydrogen station, the shaft power generation unit may be an engine. As the engine, a spark-ignition-type engine or a diesel engine is considered, but any system capable of generating shaft power and heat may be used. When the engine is used, a change in operation condition such as an activation stop or a load variation may be easily handled compared to a turbine and the like.

In the hydrogen station, the compressor may be configured as a vehicle engine supercharger. A mechanism that is used in a vehicle has extremely high efficiency, and the energy efficiency in the entire station may be improved by using such a mechanism.

In the hydrogen station, for example, the raw material is organic hydride, and the reactor may obtain hydrogen by causing a dehydrogenation reaction in the organic hydride. Alternatively, the raw material is hydrocarbon, and the reactor may obtain hydrogen by causing a reforming reaction in the hydrocarbon.

### Advantageous Effects of Invention

According to the present invention, the energy efficiency may be improved in the entire station.

### Brief Description of Drawings

Fig. 1 is a block diagram illustrating a configuration of a hydrogen station according to a first embodiment of the present invention.
Fig. 2 is a block diagram illustrating a configuration of a hydrogen station according to a second embodiment of the present invention.

### Description of Embodiments

Hereinafter, preferred embodiments of the present invention will be described in detail with reference to the drawings.

### First Embodiment

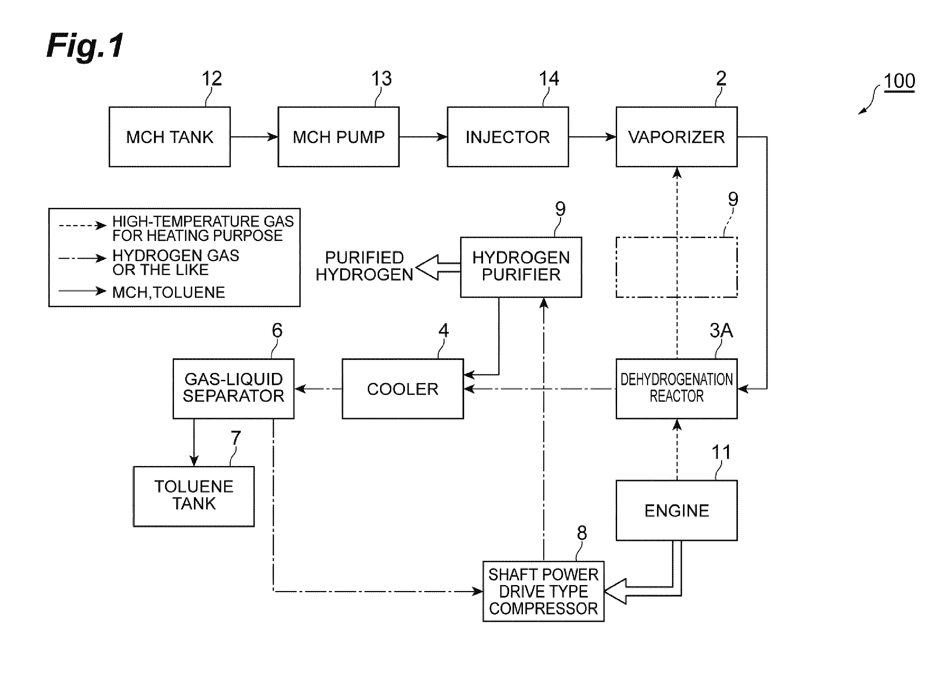

Fig. 1 is a block diagram illustrating a configuration of a hydrogen station according to a first embodiment of the present invention. A hydrogen station 100 according to the first embodiment uses organic hydride as a raw material. The organic hydride is a hydrogenated product that is obtained by causing a reaction between aromatic hydrocarbon and hydrogen produced massively from a refinery. The organic hydride may be transported to the hydrogen station 100 in the form of a liquid fuel such as gasoline by a lorry or the like. In this embodiment, methylcyclohexane (hereinafter, referred to as "MCH") is used as the organic hydride. In addition, examples of the organic hydride may include a hydrogenated product of aromatic hydrocarbon such as cyclohexane, dimethyl-cyclohexane, ethyl-cyclohexane, decalin, methyl-decalin, dimethyl-decalin, and ethyl-decalin. The hydrogen station 100 may supply hydrogen to a fuel-cell vehicle or a hydrogen engine vehicle. Further, the hydrogen station 100 may supply organic hydride to an organic hydride vehicle.

As illustrated in Fig. 1, the hydrogen station 100 according to this embodiment includes a vaporizer 2, a dehydrogenation reactor 3A, a cooler 4, a gas-liquid separator 6, a toluene tank 7, a shaft power drive type compressor 8, a hydrogen purifier 9, an engine 11, a MCH tank 12, a MCH pump 13, and an injector 14.

The vaporizer 2 is a device that vaporizes the MCH supplied from the MCH tank 12 through the injector 14 by driving the MCH pump 13. The vaporized MCH is supplied to the dehydrogenation reactor 3 A.

The dehydrogenation reactor 3A is a device that obtains hydrogen by causing a dehydrogenation reaction in the MCH. That is, the dehydrogenation reactor 3A is a device that extracts hydrogen from the MCH by the dehydrogenation reaction using a dehydrogenation catalyst. Since the dehydrogenation reaction is an endoergic reaction, heat is supplied to the dehydrogenation reactor 3A through a high-temperature gas from the engine 11. The dehydrogenation reactor 3A includes a mechanism that may exchange heat between the MCH flowing through the dehydrogenation catalyst and the high-temperature gas from the engine 11. The dehydrogenation reactor 3A supplies the extracted hydrogen gas to the cooler 4.

The cooler 4 is a device that cools the hydrogen gas extracted from the dehydrogenation reactor 3 so that the hydrogen gas may be easily separated into a gas and a liquid. The cooler 4 also cools the toluene from the hydrogen purifier 9 other than the hydrogen gas from the dehydrogenation reactor 3A. The gas-liquid separator 6 stores a mixture of the hydrogen gas and the toluene cooled by the cooler 4 and separates the mixture into the hydrogen gas as a gas and the toluene as a liquid. The toluene that is separated by the gas-liquid separator 6 is collected and stored in the toluene tank 7. The hydrogen gas that is separated by the gas-liquid separator 6 is supplied to the shaft power drive type compressor 8.

The shaft power drive type compressor 8 is a device that compresses the hydrogen gas obtained from the dehydrogenation reactor 3A and separated by the gas-liquid separator 6. The shaft power drive type compressor 8 is driven by the shaft power from the engine 11. The shaft power drive type compressor 8 supplies the compressed hydrogen gas to the hydrogen purifier 9. The shaft power drive type compressor 8 will be described later in detail.

The hydrogen purifier 9 is a device that obtains pure hydrogen by further purifying a hydrogen gas to be supplied. The hydrogen gas purifying method employed by the hydrogen purifier 9 is not particularly limited and, for example, a membrane separation method or a PSA method may be employed. In a case where the hydrogen purifier 9 needs to be warmed, the hydrogen purifier may be warmed when the hydrogen purifier is provided at a position (for example, a position indicated by the two-dotted chain line) behind the dehydrogenation reactor 3A. The pure hydrogen that is purified by the hydrogen purifier 9 is supplied to a fuel-cell vehicle through a dispenser or the like. The toluene that is separated by the hydrogen purifier 9 is supplied to the cooler 4.

The engine 11 is a device that generates shaft power and heat. The engine 11 is operated by fuel such as gasoline instead of electric power. The engine 11 is used to generate electric power inside the station by driving a generator (not illustrated) with the rotation of the rotation shaft and to drive the shaft power drive type compressor 8 by applying shaft power thereto. Further, the engine 11 is used to supply heat to the dehydrogenation reactor 3A through an exhaust gas while being connected to the dehydrogenation reactor 3A through, for example, an exhaust gas pipe. Accordingly, the engine 11 may supply heat to the dehydrogenation reactor 3A by supplying the high-temperature gas to the dehydrogenation reactor 3A. Further, the generator that is driven by the engine 11 may supply the generated electric power to the other devices of the hydrogen station 100 (furthermore, electric power may be supplied from an external system to the devices inside the hydrogen station 100). The engine 11 may be provided as a power source for driving a pump, an air compressor, and the like other than the generator.

Further, the high-temperature gas used for a heating purpose and generated by the engine 11 supplies heat to the dehydrogenation reactor 3A, supplies heat to the hydrogen purifier 9, and then supplies heat to the vaporizer 2. In this way, since the heat generated by the generation of power is effectively used, the energy efficiency in the entire station may be improved.

The shaft power drive type compressor 8 is directly driven by physical power as the shaft power generated by the engine 11 instead of the drive power generated from a motor driven by electric power. A mechanism in which the shaft power drive type compressor 8 extracts the shaft power of the engine 11 is not particularly limited. For example, the shaft power of the engine 11 may be extracted in a manner such that a pulley is attached to the front end of the shaft of the shaft power drive type compressor 8 and the pulley and the shaft of the engine are connected to each other through a belt. Alternatively, the shaft power of the engine 11 may be extracted through a crank shaft or a gear. Alternatively, the rotation of the shaft of the engine may be directly used to drive the shaft power drive type compressor 8 in a manner such that the shaft of the engine 11 directly extends so as to be common to the shaft of the shaft power drive type compressor 8. The shaft power drive type compressor 8 may pressurize the hydrogen gas to 0.2 to 0.5 MPa. Since the pressurization is performed in this level, a desired pressure may be sufficiently obtained by the mechanism that directly obtains the shaft power from the engine 11.

As the shaft power drive type compressor 8, for example, a vehicle engine supercharger may be used. When the supercharger is used, the mechanisms such as the engine and the supercharger used in the vehicle may be directly applied to the hydrogen station 100. The engine involved mechanism in the vehicle has high efficiency, and the energy efficiency in the station may be improved by using such a highly efficient mechanism. In addition, as the shaft power drive type compressor 8, a centrifugal compressor, an axial-flow compressor, and a reciprocation compressor may be employed.

Furthermore, an auxiliary compressor that is driven by a motor may be provided in addition to the shaft power drive type compressor 8. However, it is desirable to provide only the shaft power drive type compressor 8 in that the driving portion in the station may be decreased in number.

Next, an operation and an effect of the hydrogen station 100 according to the embodiment will be described.

In the hydrogen station 100 according to this embodiment, the dehydrogenation reactor 3A may obtain hydrogen by causing a dehydrogenation reaction in the MCH using the heat from the engine 11. Since the engine 11 may generate not only heat, but also shaft power, the engine 11 may also drive the other devices such as a generator. In this way, when the heat of the engine 11 usable for the other purposes is used instead of using a dedicated heating device for the dehydrogenation reactor 3A, the energy efficiency in the station may be improved. Further, the shaft power drive type compressor 8 that compresses hydrogen may be driven by the shaft power of the engine 11. That is, even when a motor for driving a pressure raising compressor is not provided, the shaft power drive type compressor 8 may be directly driven by physical power as the shaft power of the engine 11 without using electric power. In a case where the direct power as the shaft power is used, the energy may be efficiently used compared to the case where the drive power is generated from the converted electric power. Accordingly, the energy efficiency in the entire station may be improved.

### Second Embodiment

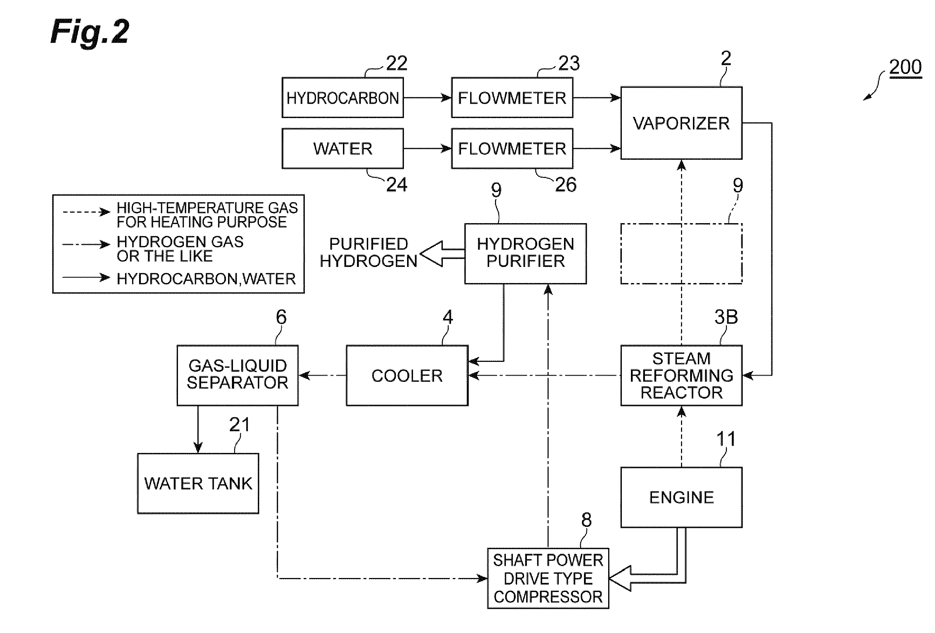

Fig. 2 is a block diagram illustrating a hydrogen station according to a second embodiment of the present invention. A hydrogen station 200 according to the second embodiment is mainly different from the hydrogen station 100 according to the first embodiment in that hydrogen is obtained by a reforming reaction using hydrocarbon as a raw material.

As the hydrocarbon, a city gas, an LP gas, naphtha, or kerosene may be employed.

As illustrated in Fig. 2, the hydrogen station 200 according to this embodiment includes the vaporizer 2, a steam reforming reactor 3B, the cooler 4, the gas-liquid separator 6, a water tank 21, the shaft power drive type compressor 8, the hydrogen purifier 9, the engine 11, a hydrocarbon supply unit 22, a hydrocarbon flowmeter 23, a water supply unit 24, and a water flowmeter 26. Furthermore, each of the vaporizer 2, the cooler 4, the gas-liquid separator 6, the shaft power drive type compressor 8, the hydrogen purifier 9, and the engine 11 has the same configuration as that of the hydrogen station 100 according to the first embodiment.

The steam reforming reactor 3B is a device that obtains hydrogen by causing a steam reforming reaction in hydrocarbon. The steam reforming reactor 3B is a device that generates hydrogen from the hydrocarbon by the steam reforming reaction using a steam reforming catalyst. Since the steam reforming reaction is an endoergic reaction, heat is supplied to the steam reforming reactor 3B through the high-temperature gas from the engine 11. The steam reforming reactor 3B includes a mechanism that may exchange heat between the hydrocarbon flowing through the steam reforming catalyst and the high-temperature gas from the engine 11. The steam reforming reactor 3B supplies the extracted hydrogen gas to the cooler 4.

The hydrogen gas is supplied to the gas-liquid separator 6 through the cooler 4 so as to be separated into a hydrogen gas and water, and the water is stored in the water tank 21.

In the hydrogen station 200 according to this embodiment, the steam reforming reactor 3B may obtain hydrogen by causing the steam reforming reaction in hydrocarbon using the heat from the engine 11. Since the engine 11 may generate not only heat, but also shaft power, the engine 11 may also drive the other devices such as a generator. In this way, since the heat of the engine 11 usable for the other purposes is used instead of a dedicated heating device for the steam reforming reactor 3B, the energy efficiency in the station may be improved. Further, the shaft power drive type compressor 8 that compresses hydrogen may be driven by the shaft power of the engine 11. That is, even when a motor for driving a pressure raising compressor is not provided, the shaft power drive type compressor 8 may be directly driven by physical power as the shaft power of the engine 11 without using electric power. In a case where the direct power as the shaft power is used, the energy may be efficiently used compared to the case where the drive power is generated from the converted electric power. Accordingly, the energy efficiency in the entire station may be improved.

The present invention is not limited to the above-described embodiments.

An example has been described in which the shaft power generation unit is the engine, but any unit capable of supplying heat and generating shaft power may be used. For example, a turbine may be also used. Here, in a case where the engine is used instead of the turbine, there is a merit that a daily activation stop operation such as a daily start and shut-down operation as an operation method supposed in the hydrogen station or a load variation operation capable of changing a hydrogen generation amount in response to a demanded hydrogen amount may be easily handled.

### Industrial Applicability

The present invention may be applied to a hydrogen station that supplies hydrogen.

### Reference Signs List

- 3A: dehydrogenation reactor (reaction unit)
- 3B: steam reforming reactor (reaction unit)
- 8: shaft power drive type compressor (compressor)
- 9: hydrogen purifier
- 11: engine (shaft power generation unit)

## Claims

1. A hydrogen station that supplies hydrogen, comprising:
a shaft power generation unit that generates shaft power and heat;
a reactor that obtains hydrogen by causing a reaction in a raw material using the heat supplied from the shaft power generation unit; and
a compressor that compresses the hydrogen obtained by the reactor,
wherein the shaft power generation unit drives the other devices and drives the compressor by applying the shaft power thereto.

2. The hydrogen station according to claim 1,
wherein the shaft power generation unit is an engine.

3. The hydrogen station according to claim 2,
wherein the compressor is configured as a vehicle engine supercharger.

4. The hydrogen station according to any one of claims 1 to 3,
wherein the raw material is organic hydride, and
wherein the reactor obtains hydrogen by causing a dehydrogenation reaction in the organic hydride.

5. The hydrogen station according to any one of claims 1 to 3,
wherein the raw material is hydrocarbon, and
wherein the reactor obtains hydrogen by causing a reforming reaction in the hydrocarbon.
